# EUROPÄISCHE PATENTSCHRIFT

(11) **EP 2 169 807 B1**
(45) Veröffentlichungstag und Bekanntmachung des Hinweises auf die Patenterteilung: **21.12.2011**
(21) Anmeldenummer: 08017239.8
(22) Anmeldetag: 30.09.2008
(51) Int. Cl.: H02K 1/28

(54) **Blechpaketanordnung mit Krallenendblech**
Laminated sheet package assembly with claw fastener end plate
Agencement de paquet en tôle doté d'une tôle d'extrémité à griffes

(43) Veröffentlichungstag der Anmeldung: 31.03.2010
(73) Patentinhaber: Siemens Aktiengesellschaft, 80333 München (DE)
(72) Erfinder: Müller, Jörg, 97720 Nüdlingen (DE)

(56) Entgegenhaltungen:
- EP-A- 1 947 758
- DE-A1- 10 053 694
- DE-A1- 10 314 394

## Beschreibung

Die vorliegende Erfindung betrifft eine Blechpaketanordnung für eine elektrische Maschine mit einem Blechpaket, das entlang einer Rotationsachse der elektrischen Maschine eine Vielzahl von Einzelblechen aufweist, und das mehrere sich entlang der Rotationsachse erstreckende Aussparungen besitzt. Darüber hinaus betrifft die vorliegende Erfindung einen Elektromotor mit einer derartigen Blechpaketanordnung.

Aufgrund der gestiegenen Anforderungen an die Leistungsfähigkeit von Elektromotoren müssen die Elektrobleche für Läufer bzw. Ständer immer dünner ausgeführt werden. Dies verringert zwar die Verluste des Motors, aber es ergeben sich dadurch erhebliche Nachteile bei der Montage.

Bei der Fertigung beispielsweise von Läufern werden die einzelnen Läuferbleche unter einem gewissen Druck in einem Blechpaket zusammengehalten und so auf eine Welle montiert. Ein stirnseitiges Läuferblech neigt dann dazu, sich durch die Spannungen nach außen zu biegen. Dadurch kommt es zu unkontrollierten Überständen am Rotor. Je nach Bauweise des Motors kann es unter Umständen sogar dazu kommen, dass das Läuferblech an Inaktivteilen des Motors anliegt. Bei Betrieb entsteht somit durch die Relativbewegung Abrieb, der gegebenenfalls zum Ausfall des Motors führen kann. Weiterhin können die verbogenen Läuferbleche zu Schwingungsproblemen führen, die zu berücksichtigen sind.

Es zeigt sich auch, dass je dünner das Blech eines Blechpakets ist, desto geringer die Haltekraft auf der Welle wird. Dadurch kann es im weiteren Fertigungsprozess zu einem Verdrehen beispielsweise des letzten Läuferblechs kommen.

Um ein unkontrolliertes Biegen der äußeren bzw. stirnseitigen Läuferbleche weitestgehend zu vermeiden, werden bislang Kerbnägel und Hohlnieten eingesetzt. Diese werden nachträglich, d.h. nach der Montage des Blechpakets auf eine Welle, an das jeweilige Läuferblech angebracht. Da die Kerbnägel und Hohlnieten am Umfang gleichmäßig verteilt einzeln angebracht werden müssen, ist für die Montage eines Rotors insgesamt ein erheblicher Zeitaufwand nötig.

Aus der EP 1 947 758 A2 ist ein Rotor einer elektrischen Maschine bekannt, bei dem an den Stirnseiten Endplatten vorhanden sind, die sich elastisch verformen lassen.

Aus der DE 100 53 694 A1 ist ein Drehstromsynchronmotor bekannt, mit einem Stator, einem um eine Rotationsachse rotierenden und mindestens einen Permanentmagneten tragenden Rotor und Mitteln zum Fixieren des Permanentmagneten an dem Rotor, wobei die Mittel zum Fixieren ein am stirnseitigen Ende des Rotors angeordnetes und sich im Wesentlichen in einer Fläche erstreckendes Klemmelement aufweisen, das mindestens eine Klemmkralle aufweist, die in fixierender Anlage an dem Permanentmagneten ist.

Aus der DE 103 14 394 A1 ist ein bürstenlosen Gleichstrommotor mit einer Welle bekannt, mit einem auf der Welle angeordneten Rückschlusskörper und einem den Rückschlusskörper umgebenden Ringmagneten. Der Rotor hat dabei im axial verlaufenden Bereich zwischen dem Rückschlusskörper und dem Ringmagneten ein Spalt und mindestens ein Haltelement, das außerhalb des Spaltes einerseits mit der Welle oder dem Rückschlusskörper und andererseits mit dem Ringmagneten verbunden ist und durch das der Ringmagnet kraftschlüssig mit der Welle bzw. dem Rückschlusskörper verbunden und zudem gegenüber der Welle bzw. dem Rückschlusskörper zentriert ist.

Die Aufgabe der vorliegenden Erfindung besteht somit darin, den Montageaufwand einer elektrischen Maschine bzw. einer Blechpaketanordnung für eine elektrische Maschine zu reduzieren.

Erfindungsgemäß wird diese Aufgabe gelöst durch die Merkmale des Anspruchs 1.

In vorteilhafter Weise ist es durch das erfindungsgemäße Krallenendblech möglich, auch mit sehr dünnen Einzelblechen eine verhältnismäßig biegesteife Blechpaketanordnung herzustellen, die sich als Ganzes auf eine Welle montieren lässt. Dadurch sind nicht mehr viele einzelne Arbeitsschritte notwendig, um ein Verbiegen stirnseitiger Bleche beispielsweise eines Läuferblechpakets zu vermeiden.

Ferner reicht jedes freie Ende des Krallenendblechs in axialer Richtung durch mehrere Einzelbleche hindurch. Damit lassen sich an der Stirnseite eines Blechpakets mehrere Bleche aneinander fixieren.

Vorzugsweise ist das Krallenendblech so geformt, dass es in den Aussparungen des Blechpakets bezüglich axialer Bewegung form- und/oder kraftschlüssig sitzt. Dadurch stützt und fixiert das Krallenendblech das bzw. die stirnseitigen Bleche eines Blechpakets.

Darüber hinaus kann das Krallenendblech so geformt sein, dass es in den Aussparungen des Blechpakets bezüglich einer Bewegung in Umfangsrichtung form- und/oder kraftschlüssig sitzt. Damit lässt sich ein Verdrehen eines stirnseitigen Blechs der Blechpaketanordnung bei der Montage der Blechpaketanordnung weitestgehend vermeiden.

Darüber hinaus ist die Blechpaketanordnung als Rotor ausgebildet und auf eine Welle montiert. Insbesondere ist es günstig, einen derartigen Rotor für einen Elektromotor einzusetzen, so dass etwaige Schwingungsprobleme reduziert und ungewollter Abrieb vermindert werden können.

Speziell kann es von Vorteil sein, wenn der ringförmige Innenbereich eines Krallenendblechs in einer Presspassung auf die Welle montiert ist. Damit kann auch das Krallenendblech für einen verbesserten Halt des Rotors auf einer Welle in axialer Richtung und in Umfangsrichtung sorgen.

Die vorliegende Erfindung wird nun anhand der beigefügten Zeichnungen näher erläutert, in denen zeigen:
- FIG 1: einen Rotor gemäß dem Stand der Technik;
- FIG 2: ein Krallenendblech gemäß der vorliegenden Erfin- dung und
- FIG 3: einen Rotor eines Elektromotors mit einem Krallen- endblech.

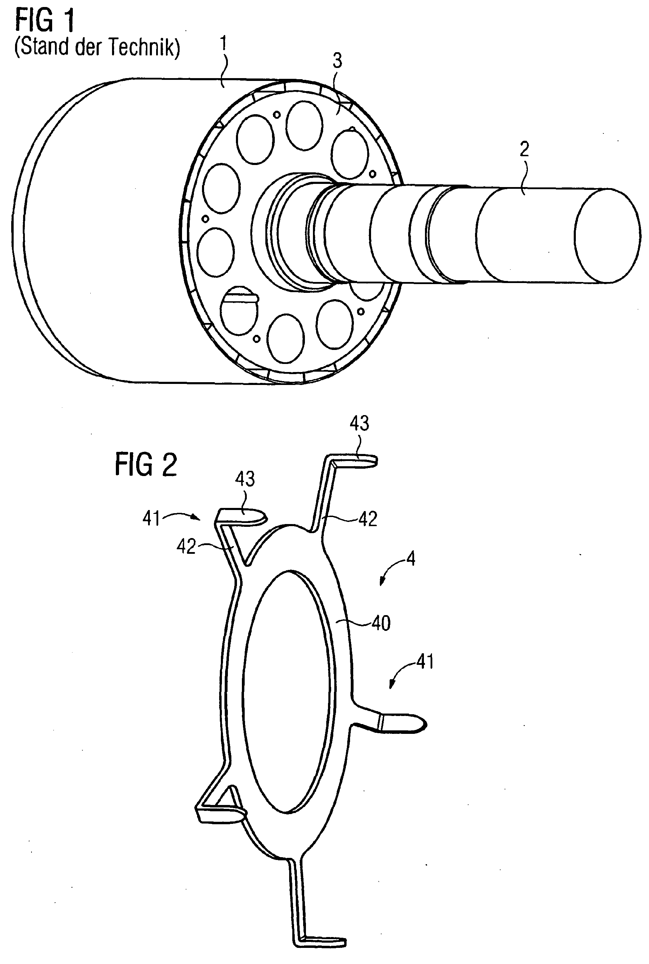

Die nachfolgend näher geschilderten Ausführungsbeispiele stellen bevorzugte Ausführungsformen der vorliegenden Erfindung dar. Zunächst wird jedoch anhand von FIG 1 zum besseren Verständnis der Erfindung der Aufbau eines Rotors gemäß dem Stand der Technik näher erläutert.

Das in FIG 1 dargestellte Läuferblechpaket 1 setzt sich aus einer Vielzahl von axial hintereinander angeordneten Einzelblechen zusammen. Das Läuferblechpaket 1 ist hier auf eine Welle 2 montiert. Das letzte stirnseitige Einzelblech 3 des Läuferblechpakets 1 ist hier wie jedes andere Einzelblech ohne zusätzliche Maßnahmen zur Fixierung in axialer Richtung sowie in Umfangsrichtung auf der Welle montiert. Die einzige Befestigung der Einzelbleche erfolgt jeweils über die kraftschlüssige Verbindung jedes Einzelblechs an seinem Innendurchmesser mit der Welle 2.

Da das letzte stirnseitige Einzelblech 3 in axialer Richtung nach außen keinen zusätzlichen Halt hat, können die mechanischen Spannungen dazu führen, dass es sich nach außen biegt. Aus diesem Grund wird nun erfindungsgemäß ein Krallenendblech bereitgestellt, das in FIG 2 in perspektivischer Darstellung wiedergegeben ist. Dieses Krallenendblech 4 dient zur zusätzlichen Befestigung des stirnseitigen Endblechs 3.

Das Krallenendblech 4 ist in dem vorliegenden Beispiel, wie sein Name bereits andeutet, aus einem Blech gebildet. Das Material kann das gleiche sein wie von den übrigen Einzelblechen des Läuferblechpakets 1. Insbesondere kann es einteilig aus einem Blech ausgestanzt sein.

Die Geometrie des Krallenendblechs 4 wird im Wesentlichen bestimmt durch einen ringförmigen Innenbereich 40 und mehreren an dessen Außenumfang radial nach außen ragenden Krallen 41. Jede Kralle 41, die auch als Fortsatz bezeichnet werden kann, besitzt einen inneren Teil 42, der unmittelbar an den ringförmigen Innenbereich 40 anschließt. Der ringförmige Innenbereich und die inneren Teile 42 der Krallen 41 erstrecken sich damit im Wesentlichen in einer Ebene. Das äußere freie Ende 43 jeder Kralle 41 ist im vorliegenden Fall derart umgebogen, dass es senkrecht zu der Ebene verläuft, d. h. in axialer Richtung des ringförmigen Innenbereichs 40 weist. Dabei zeigen sämtliche äußeren Enden 43 in die gleiche Richtung. Im vorliegenden Beispiel besitzt das Krallenendblech 4 fünf Krallen 41, die am Außenumfang des ringförmigen Innenbereichs 40 gleichmäßig verteilt sind.

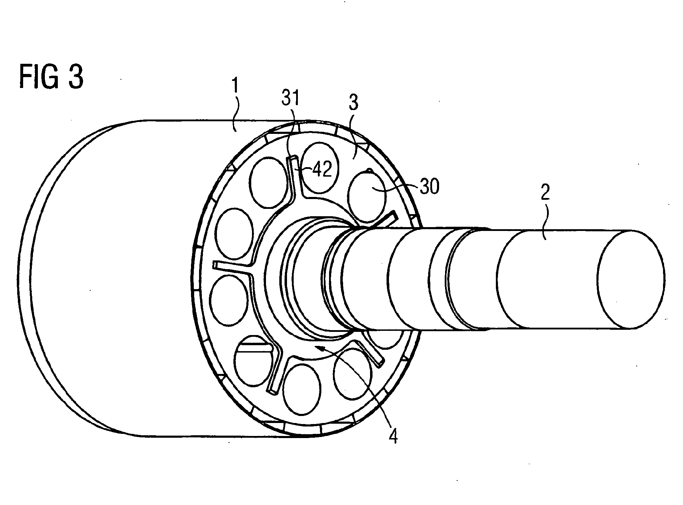

In FIG 3 ist nun die erfindungsgemäße Fixierung einer Blechpaketanordnung mit Hilfe eines Krallenendblechs dargestellt. Im konkreten Beispiel wird das Läuferblechpaket 1 auf der Welle 2 stirnseitig mit dem Krallenendblech 4 versehen. Hierzu besitzt das stirnseitige Einzelblech 3 wie auch die übrigen Einzelbleche neben üblichen Aussparungen 30 spezielle Fixieraussparungen 31, in die die äußeren Enden 43 der Krallen 41 des Krallenendblechs 4 eingefügt sind. Da das Krallenendblech 4 hier ebenfalls kraftschlüssig auf der Welle 2 sitzt (z. B. aufgeschrumpft ist), erhält das letzte Einzelblech 3 durch das Krallenendblech 4 eine zusätzliche axiale Fixierung sowie eine zusätzliche Fixierung in Umfangsrichtung.

Aus dem Beispiel von FIG 2 ist erkennbar, dass es vorteilhaft ist, wenn sich die äußersten abgewickelten Enden 43 der Krallen 41 in axialer Richtung über einer Länge erstrecken, die ein Vielfaches der Blechdicke eines Einzelblechs bzw. des Krallenendblechs 4 ist. Dadurch greift das Krallenendblech 4 im montierten Zustand in entsprechende Fixieraussparungen mehrerer Einzelbleche. Bei entsprechender Dimensionierung der Fixieraussparungen 31 können die Enden 43 der Krallen 41 so einen Formschluss mit mehreren Läuferblechen bewirken. Da ein derartiger Verband ein wesentlich höheres Verdrehmoment aufweist, ist die Gefahr der Verdrehung der letzten Läuferbleche vermindert.

Bei der Montage wird das Läuferblechpaket 1 zusammen mit dem Krallenendblech 4 als Blechpaketanordnung auf die Welle 2 aufgebracht. Es erfolgt also ein gleichzeitiges Aufbringen der Läuferblechfixierung (Krallenendblech 4) mit dem Läuferblechpaket 1 auf die Welle 2. Somit verhindert das Krallenendblech bereits bei der Montage ein Aufbiegen des äußeren, stirnseitigen Einzelblechs und gegebenenfalls auch der darunter liegenden Einzelbleche.

Ein besonderer Vorteil des Krallenendblechs 4 liegt aber darin, dass Montagezeit eingespart werden kann. Der Grund hierfür liegt darin, dass das Blechpaket 1 zusammen mit dem Krallenendblech 4 in einem einzigen Arbeitsgang auf die Welle 2 montiert werden kann und dadurch mit der Blechpaketmontage gleichzeitig die Läuferblechfixierung (allgemein die Fixierung des äußersten bzw. der äußersten Endbleche) erfolgt.

## Patentansprüche

1. Blechpaketanordnung für eine elektrische Maschine mit
- einem Blechpaket (1), das entlang einer Rotationsachse der elektrischen Maschine eine Vielzahl von Einzelblechen aufweist, und das mehrere sich entlang der Rotationsachse erstreckende Aussparungen (31) besitzt,
- wobei die Blechpaketanordnung als Rotor ausgebildet ist und auf einer Welle montiert ist,
- einem Krallenendblech, das an einer Stirnseite des Blechpakets angeordnet ist, das einen ringförmigen Innenbereich aufweist von dem sternförmig nach außen krallenförmige Fortsätze ragen,
**dadurch gekennzeichnet, dass** deren jeweils innerer Teil (42) radial nach außen ragt und deren jeweils äußeres freies Ende (43) in eine der Aussparungen (31) des Blechpakets (1) weist, wobei jedes freie Ende (43) des Krallenendblechs (4) in axialer Richtung durch mehrere Einzelbleche hindurchreicht.

2. Blechpaketanordnung nach Anspruch 1, wobei das Krallenendblech (4) so geformt ist, dass es in den Aussparungen (31) des Blechpakets (1) bezüglich axialer Bewegung form- und/oder kraftschlüssig sitzt.

3. Blechpaketanordnung nach Anspruch 1 oder 2, wobei das Krallenendblech (4) so geformt ist, dass es in den Aussparungen (31) des Blechpakets (1) bezüglich einer Bewegung in Umfangsrichtung form- und/oder kraftschlüssig sitzt.

4. Blechpaketanordnung nach Anspruch 3, wobei der ringförmige Innenbereich (40) in einer Presspassung auf die Welle (2) montiert ist.

5. Elektromotor mit einem Rotor nach einem der Vorangehenden Ansprüche.

## Claims

1. Laminated core arrangement for an electrical machine having
- a laminated core (1) which has a multiplicity of individual laminates along a rotation axis of the electrical machine and has a plurality of cutouts (31) which extend along the rotation axis,
- wherein the laminated core arrangement is in the form of a rotor and is mounted on a shaft,
- a claw-type end plate which is arranged on one end face of the laminated core and has an annular inner area from which projections which are in the form of claws project outward in the form of a star,
**characterized in that** the inner part (42) of each of the projections projects radially outward, and the outer free end (43) of each of said projections points into one of the cutouts (31) in the laminated core (1), wherein each free end (43) of the claw-type end plate (4) passes through a plurality of individual laminates in the axial direction.

2. Laminated core arrangement according to Claim 1, wherein the claw-type end plate (4) is shaped such that it is seated in an interlocking and/or force-fitting manner, with respect to axial movement, in the cutouts (31) in the laminated core (1).

3. Laminated core arrangement according to Claim 1 or 2, wherein the claw-type end plate (4) is shaped such that it is seated in an interlocking and/or force-fitting manner, with respect to a movement in the circumferential direction, in the cutouts (31) in the laminated core (1).

4. Laminated core arrangement according to Claim 3, wherein the annular inner area (40) is mounted on the shaft (2) with an interference fit.

5. Electric motor having a rotor according to one of the preceding claims.

## Revendications

1. Agencement de paquet de tôles pour une machine électrique, comprenant
- un paquet ( 1 ) de tôles, qui a une pluralité de tôles individuelles le long d'un axe de révolution de la machine électrique et qui a plusieurs évidements ( 31 ) s'étendant le long de l'axe de révolution,
- dans lequel l'agencement de paquet de tôles est constitué en rotor et est monté sur un arbre,
- une tôle d'extrémité formant crampon, qui est disposée sur un côté frontal du paquet de tôles et qui a une zone intérieure annulaire, de laquelle dépassent en forme d'étoile des prolongements vers l'extérieur en forme de crampon,
**caractérisé en ce que** leur partie ( 42 ) intérieure respective fait saillie radialement vers l'extérieur et leur extrémité ( 43 ) libre extérieure respective pointe dans l'un des évidements ( 31 ) du paquet ( 1 ) de tôles, chaque extrémité ( 43 ) libre de la tôle ( 4 ) d'extrémité formant crampon traversant en direction axiale plusieurs tôles individuelles.

2. Agencement de paquet de tôles suivant la revendication 1, dans lequel la tôle (4) d'extrémité formant crampon est conformée, de manière à être assise à complémentarité de forme et/ou de force, en ce qui concerne le déplacement axial dans les évidements ( 31 ) du paquet ( 1 ) de tôles.

3. Agencement de paquet de tôles suivant la revendication 1 ou 2, dans lequel la tôle ( 4 ) d'extrémité formant crampon est conformée, de manière à être assise par complémentarité de forme et/ou de force, en ce qui concerne un déplacement dans la direction périphérique, dans les évidements ( 31 ) du paquet ( 1 ) de tôles.

4. Agencement de paquet de tôles suivant la revendication 3, dans lequel la zone ( 40 ) intérieure annulaire est montée à ajustage serré sur l'arbre ( 2 ).

5. Moteur électrique, comprenant un rotor suivant l'une des revendications précédentes.
